# EUROPEAN PATENT SPECIFICATION

(11) **EP 4 496 713 B1**
(45) Date of publication and mention of the grant of the patent: **28.01.2026**
(21) Application number: 23714322.7
(22) Date of filing: 14.03.2023
(51) Int. Cl.: B41J 2/165, B41J 3/407

(54) **LIQUID DISCHARGE APPARATUS, LIQUID DISCHARGE SYSTEM, AND CLEANING METHOD FOR LIQUID DISCHARGE APPARATUS**
FLÜSSIGKEITSAUSSTOSSVORRICHTUNG, FLÜSSIGKEITSAUSSTOSSSYSTEM UND REINIGUNGSVERFAHREN FÜR FLÜSSIGKEITSAUSSTOSSVORRICHTUNG
APPAREIL D'ÉVACUATION DE LIQUIDE, SYSTÈME D'ÉVACUATION DE LIQUIDE ET PROCÉDÉ DE NETTOYAGE POUR APPAREIL D'ÉVACUATION DE LIQUIDE

(30) Priority: 23.03.2022 JP 2022047273
(43) Date of publication of application: 29.01.2025
(73) Proprietor: Ricoh Company, Ltd., Tokyo 143-8555 (JP)
(72) Inventor: TANAKA, Tomoya, Tokyo 143-8555 (JP); CHEN, Bingxian, Tokyo 143-8555 (JP); AOKI, Kento, Tokyo 143-8555 (JP); YOSHIDA, Shigeru, Tokyo 143-8555 (JP)
(74) Representative: SSM Sandmair
(86) International application number: PCT/IB2023/052431
(87) International publication number: WO 2023/180869

(56) References cited:
- JP-A- 2016 155 253
- US-A1- 2021 291 514
- US-B2- 8 596 753

## Description

### [Technical Field]

Embodiments of the present disclosure relate to a liquid discharge apparatus, a liquid discharge system, and a cleaning method for a liquid discharge apparatus.

### [Background Art]

In the related art, a liquid discharge apparatus is known to discharge liquid to a medium. The liquid discharge apparatus includes a liquid discharge head that discharges liquid from a liquid discharge port (nozzle). When the liquid discharge head discharges liquid, some of the liquid (residual liquid) may adhere to a nozzle portion such as the nozzle or a portion around the nozzle. When the residual liquid is remained as it is, the residual liquid in the nozzle portion dries and thickens, and then the residual liquid solidifies as the drying proceeds. Such thickening or solidification of the residual liquid affects the performance of subsequent liquid discharge. In order to maintain the performance of discharge of the liquid discharge apparatus, a cleaning apparatus is known to periodically perform a cleaning process that cleans the liquid discharge head to remove the residual liquid.

As a configuration for performing a cleaning process to prevent a decrease of performance of liquid discharge, a configuration is disclosed that includes a first cleaner and a second cleaner to perform cleaning in a state where a nozzle opening face is disposed in an inclined state (for example, Japanese Unexamined Patent Application Publication No. 2020-189446). The first cleaner wipes the nozzle opening face to clean the nozzle opening face. The second cleaner wipes a lower end of the nozzle opening face in an inclined state.

The document US 8596753 B2 discloses a liquid discharge apparatus according to the preamble of claim 1 and a conventional cleaning method.

### [Citation List]

### [Patent Literature]

[PTL 1]
   Japanese Unexamined Patent Application Publication No. 2020-189446
[PTL 2]
   US 8596753 B2

### [Summary of Invention]

### [Technical Problem]

As in a configuration disclosed in Japanese Unexamined Patent Application Publication No. 2020-189446, when a nozzle opening face is inclined at the time of cleaning, cleaning liquid including residual liquid flows along the nozzle opening face in the gravity direction. The nozzle opening face is secondarily stained due to the flow of the residual liquid.

An object of the present disclosure is to provide a liquid discharge apparatus that can improve the cleanability of a nozzle opening face of a liquid discharge head.

### [Solution to Problem]

In order to solve the problem described above, a liquid discharge apparatus according to claim 1 and a cleaning method according to claim 9 are provided.

### [Advantageous Effects of Invention]

According to the present disclosure, the cleanability of a nozzle opening face of a liquid discharge head can be enhanced.

### [Brief Description of Drawings]

A more complete appreciation of embodiments of the present disclosure and many of the attendant advantages and features thereof can be readily obtained and understood from the following detailed description with reference to the accompanying drawings
[FIG. 1]

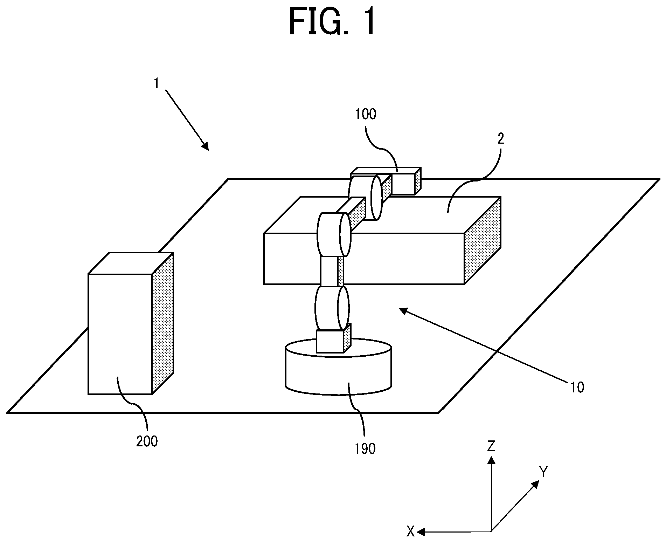

   FIG. 1 is a perspective view of a liquid discharge system and a liquid discharge apparatus according to an embodiment of the present disclosure.
[FIG. 2]

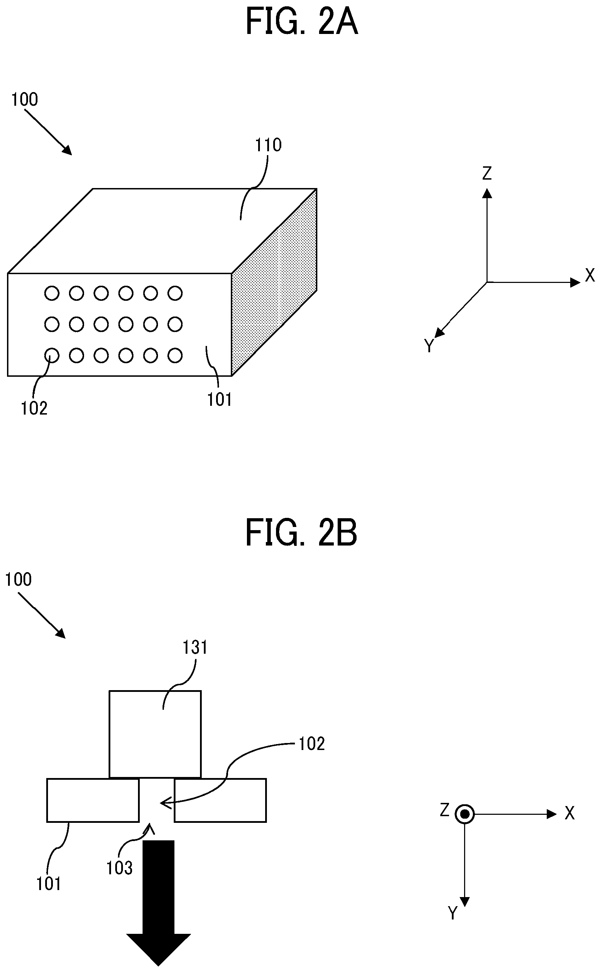

   FIG. 2A is a perspective view of a liquid discharge head according to an embodiment of the present disclosure, and FIG. 2B is a partial cross-sectional view of the liquid discharge head according to an embodiment of the present disclosure.
[FIG. 3]

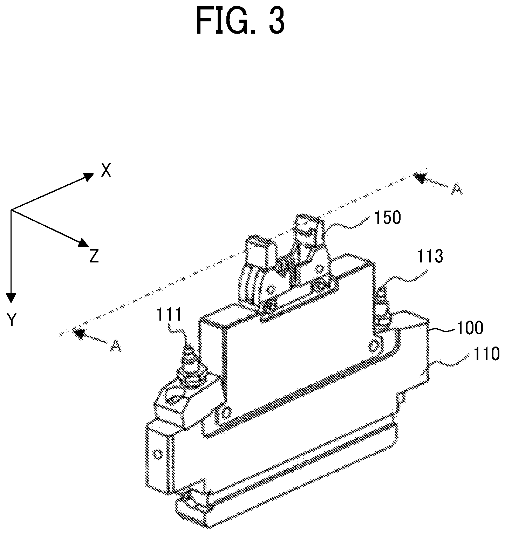

   FIG. 3 is a detailed perspective view of the liquid discharge head according to an embodiment of the present disclosure.
[FIG. 4]

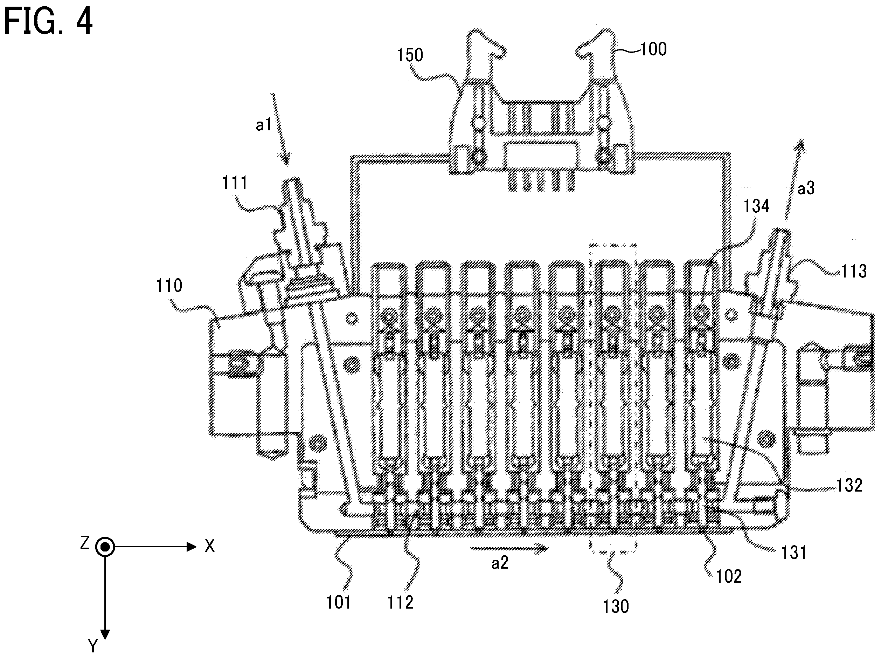

   FIG. 4 is an overall cross-sectional view of the liquid discharge head according to an embodiment of the present disclosure.
[FIG. 5]

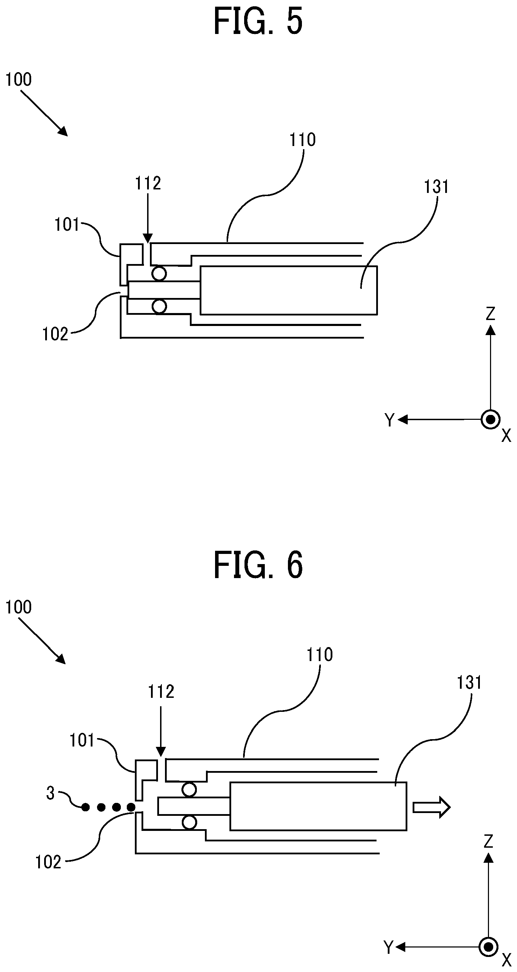

   FIG. 5 is a diagram of an operation principle of the liquid discharge head illustrated in FIG. 4.
[FIG. 6]
   FIG. 6 is another diagram of the operation principle of the liquid discharge head illustrated in FIG. 4.
[FIG. 7]

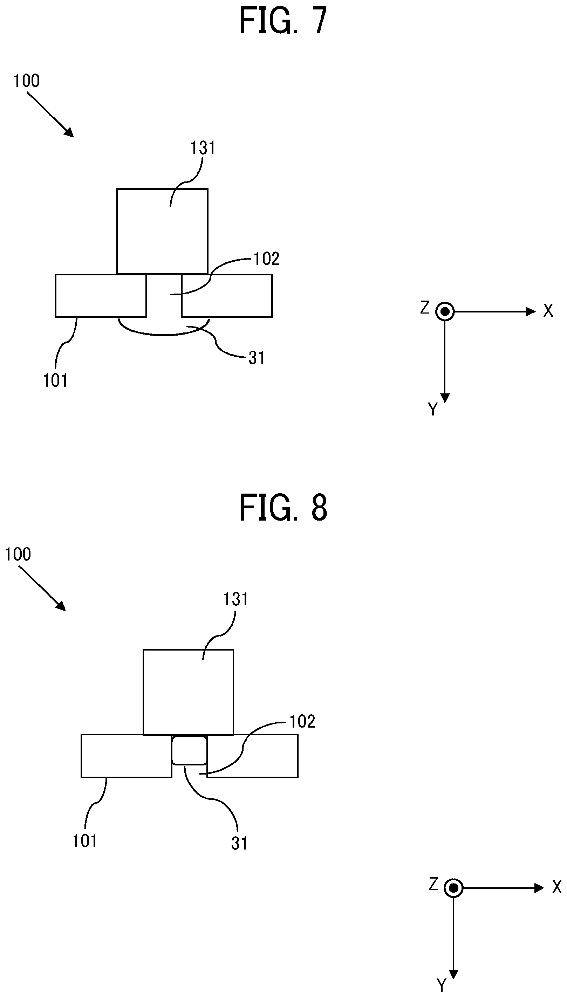

   FIG. 7 is a diagram illustrating an example of stain around a nozzle opening in the liquid discharge head illustrated in FIG. 4.
[FIG. 8]
   FIG. 8 is a diagram illustrating another example of stain around the nozzle opening in the liquid discharge head illustrated in FIG. 4.
[FIG. 9]

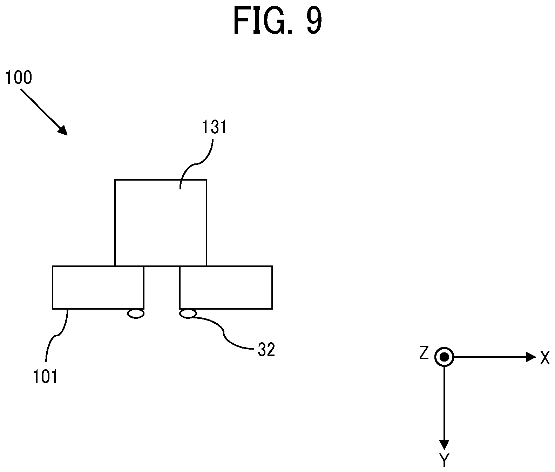

   FIG. 9 is a diagram illustrating another example of stain around the nozzle opening in the liquid discharge head illustrated in FIG. 4.
[FIG. 10]

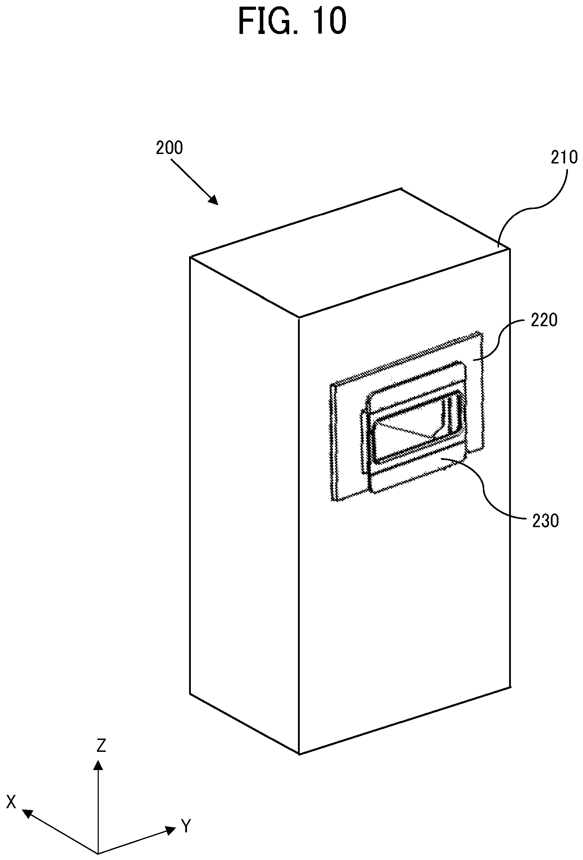

   FIG. 10 is a perspective view illustrating an example of a cleaning device according to an embodiment of the present disclosure.
[FIG. 11]

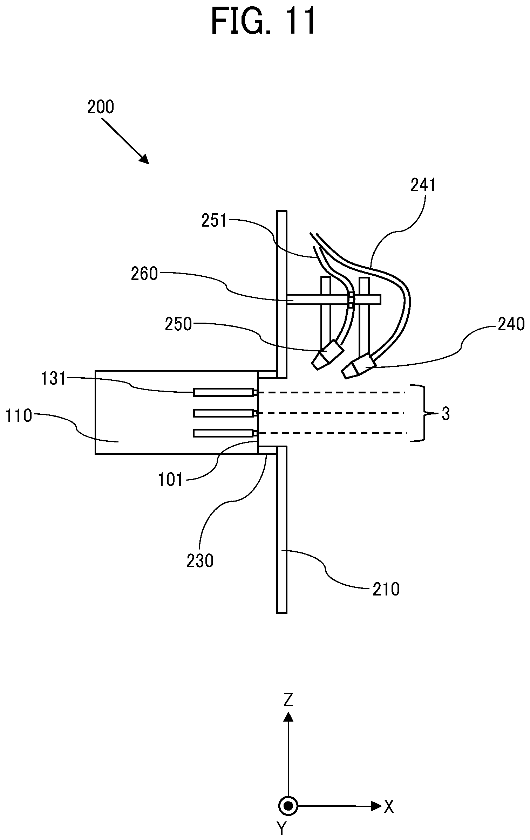

   FIG. 11 is a diagram illustrating an internal configuration of the cleaning device according to an embodiment of the present disclosure.
[FIG. 12]

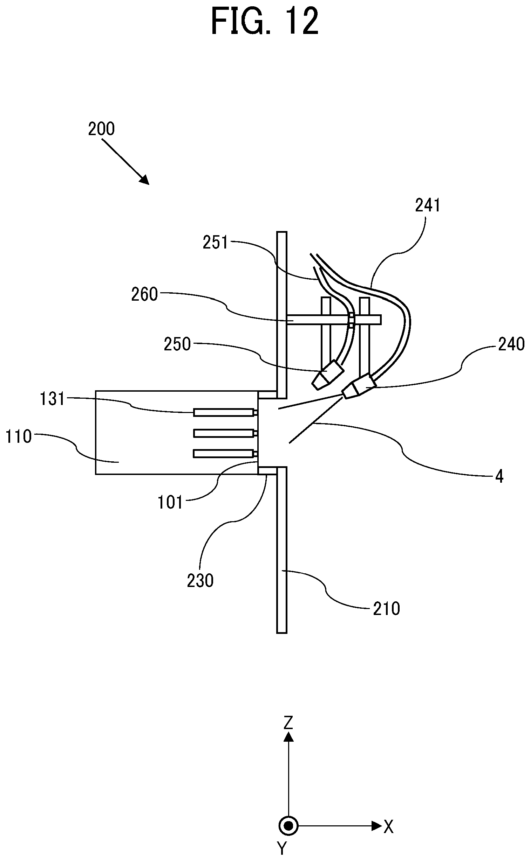

   FIG. 12 is a diagram illustrating an operation of the cleaning device according to an embodiment of the present disclosure.
[FIG. 13]

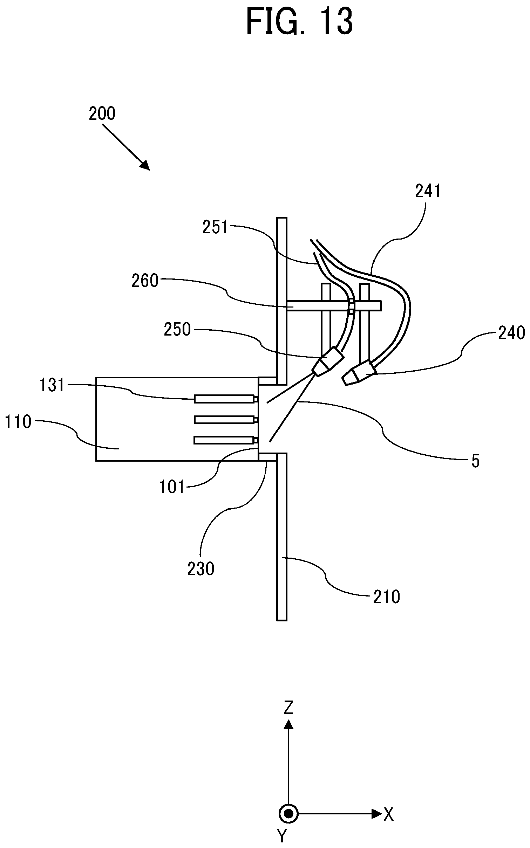

   FIG. 13 is another diagram illustrating the operation of the cleaning device according to an embodiment of the present disclosure.
[FIG. 14]

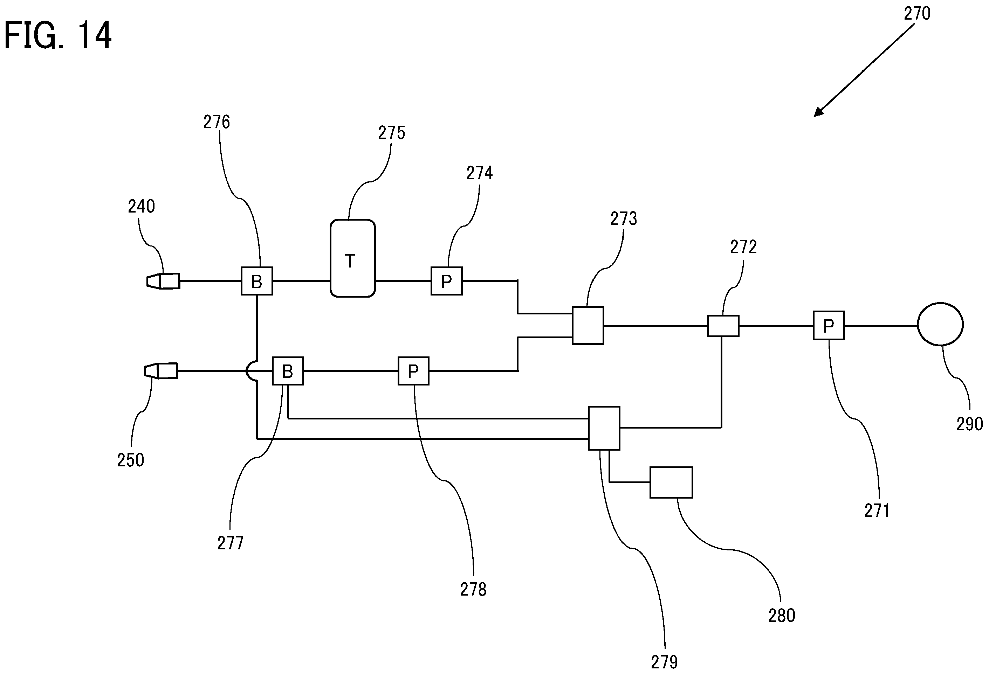

   FIG. 14 is a diagram illustrating a configuration of air supply of the cleaning device according to an embodiment of the present disclosure.
[FIG. 15]

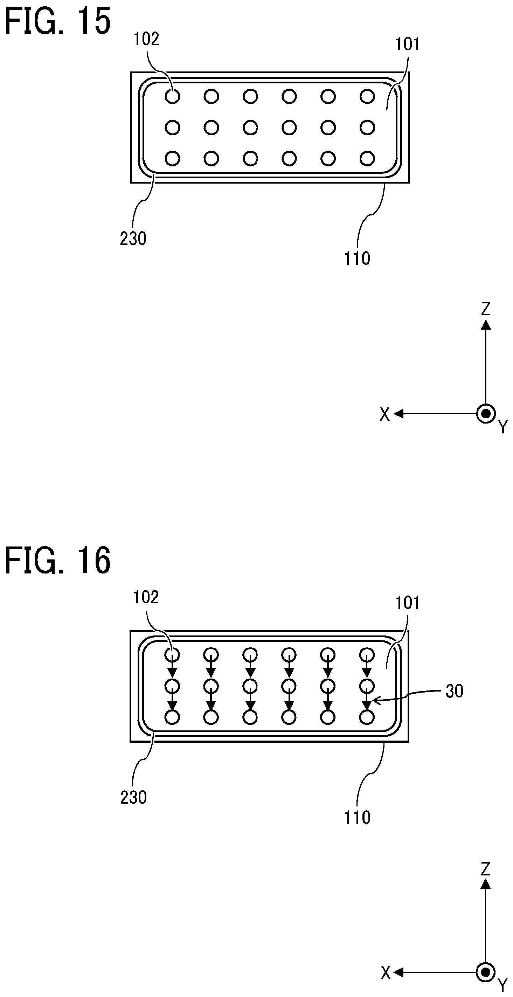

   FIG. 15 is a diagram illustrating a fixed state of the liquid discharge head during cleaning according to an embodiment of the present disclosure.
[FIG. 16]
   FIG. 16 is a diagram illustrating secondary stain generated at the time of cleaning of the liquid discharge head illustrated in FIG. 15.
[FIG. 17]

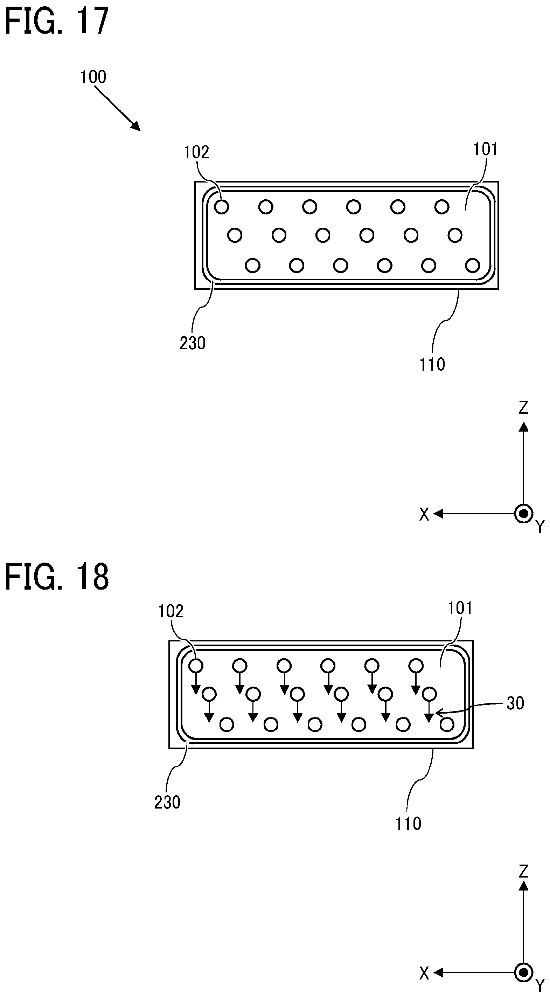

   FIG. 17 is a diagram illustrating an example of a nozzle array of the liquid discharge head according to an embodiment of the present disclosure.
[FIG. 18]
   FIG. 18 is a diagram illustrating effects obtained by the nozzle array of the liquid discharge head according to an embodiment of the present disclosure.
[FIG. 19]

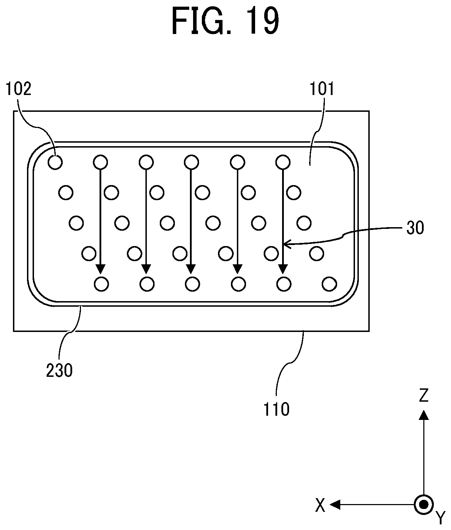

   FIG. 19 is a diagram illustrating another example of the nozzle array of the liquid discharge head according to an embodiment of the present disclosure.
[FIG. 20]

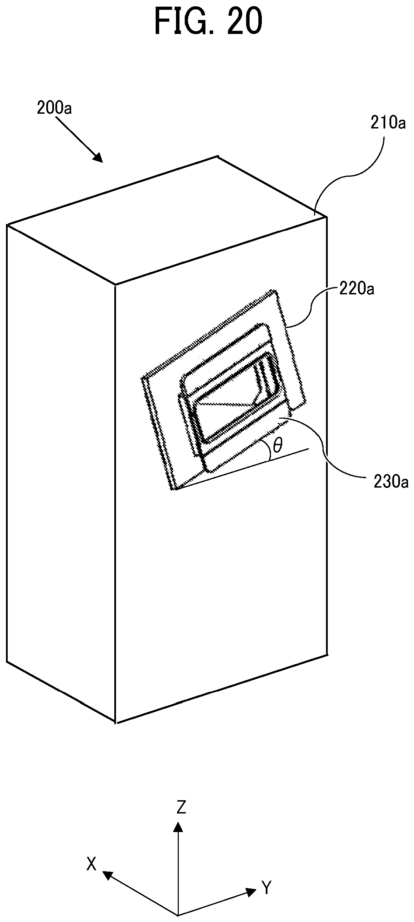

   FIG. 20 is a perspective view illustrating another example of the cleaning device according to an embodiment of the present disclosure.
[FIG. 21]

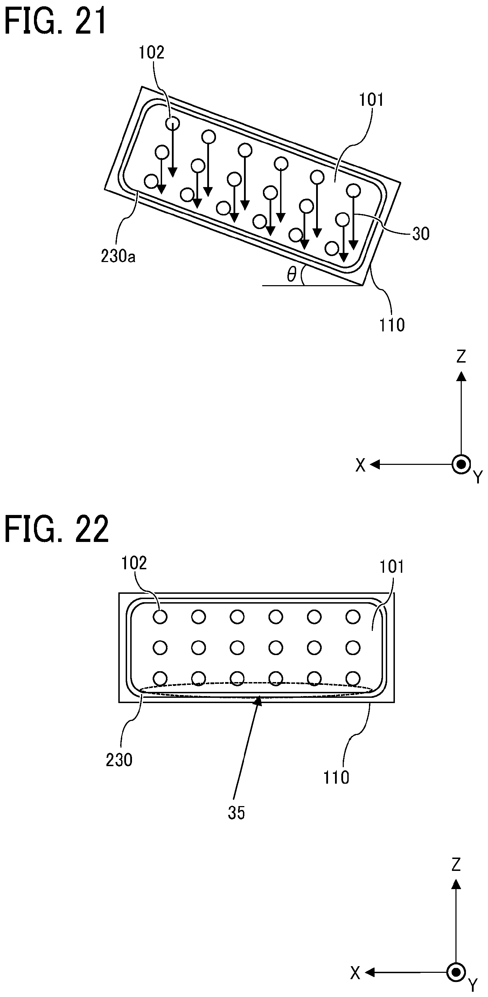

   FIG. 21 is another diagram illustrating effects obtained by the nozzle array of the liquid discharge head according to an embodiment of the present disclosure.
[FIG. 22]
   FIG. 22 is a diagram illustrating a staying position of secondary stain generated when the liquid discharge head illustrated in FIG. 21 is in a normal state, according to an embodiment of the present disclosure.
[FIG. 23]

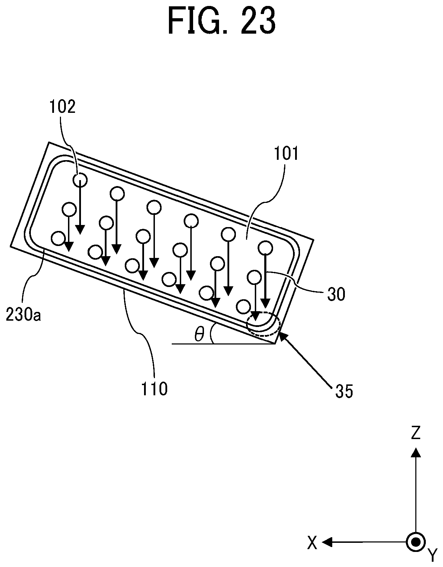

   FIG. 23 is another diagram illustrating a staying position of secondary stain generated when the liquid discharge head illustrated in FIG. 21 is in a normal state, according to an embodiment of the present disclosure.
The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### [Description of Embodiments]

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.
Referring now to the drawings, embodiments of the present disclosure are described below. As used herein, the singular forms "a," "an," and "the" are intended to include the plural forms as well, unless the context clearly indicates otherwise.

Hereinafter, embodiments of a liquid discharge apparatus and a cleaning device of the liquid discharge apparatus according to the present disclosure are described with reference to the drawings. FIG. 1 is a schematic diagram illustrating an overview of a liquid discharge system according to an embodiment of the present disclosure. As illustrated in FIG. 1, a liquid discharge system 1 according to the present embodiment includes an inkjet head 100, a head conveyance robot 190, and a cleaning station 200.

In the following description, the term "direction" may be used to describe the orientation of each configuration, and the definition of the direction is described. As illustrated in FIG. 1, two orthogonal axes (X-axis and Y-axis) constituting a horizontal plane and a Z-axis orthogonal to both the axes are assumed. In this case, since a medium 2 is positioned in the direction of the Y-axis (Y-direction) with respect to the inkjet head 100, the direction in which the inkjet head 100 discharges liquid ink corresponds to the Y-direction. The cleaning station 200 is disposed in the direction of the X-axis (X-direction) with respect to the head conveyance robot 190 supporting the inkjet head 100. Accordingly, as described later, when the inkjet head 100 is cleaned, the orientation of the inkjet head 100 corresponds to the X-direction. In a case where the liquid discharge system 1 is installed on the X-Y plane, the height direction is the direction of the Z-axis (Z-direction). Assuming that the direction of each arrow illustrated in FIG. 1 is the positive direction, the gravity direction corresponds to the -Z-direction.

### Outline of Embodiment of Liquid Discharge System

The liquid discharge system 1 discharges liquid ink to the medium 2 and is used for image formation processing such as coating of the surface of the medium 2 or forming of an image on the surface of the medium 2. Note that the medium 2 may be a three-dimensional object or a planar object, but may be, for example, a three-dimensional object such as a vehicle.

The inkjet head 100 according to the present embodiment is an example of a liquid discharge head according to an embodiment of the present disclosure and includes a discharge mechanism that discharges liquid ink to the medium 2. The discharge mechanism of the inkjet head 100 is described in detail later.

In the head conveyance robot 190, a support member that supports the inkjet head 100 has a plurality of axes. The directions of rotation about the respective axes are different directions. Accordingly, the head conveyance robot 190 corresponds to a multi-axis movable support member that can combine rotations of the respective axes to freely move the inkjet head 100 in a three-dimensional space (X-Y-Z space) and hold the inkjet head 100 in a predetermined state. In other words, the support of the head conveyance robot 190 three-dimensionally changes the direction of the liquid ink to be discharged from the inkjet head 100. The head conveyance robot 190 has, for example, six axes, and can support the posture of the inkjet head 100 such that when liquid ink is discharged to a three-dimensional face of the medium 2 that is a three-dimensional object, the direction of discharge of the liquid ink is directed to the three-dimensional face in a predetermined direction.

The cleaning station 200 is a cleaning device that performs a cleaning process to clean residual liquid ink (residual liquid) adhering to the peripheries of discharge ports (nozzles 102) after the inkjet head 100 discharges liquid ink. The cleaning station 200 has a function to eject cleaning liquid 4 toward the nozzles 102 to wash away the residual liquid, and to eject gas to blow away the cleaning liquid 4 attached to the nozzle 102 during cleaning. The cleaning station 200 is described in detail later.

The liquid discharge system 1 includes a controller that controls an operation of discharge of the inkjet head 100, an operation of the head conveyance robot 190, and an operation of the cleaning station 200.

The liquid discharge system 1 executes the cleaning process of a nozzle plate 101 of the inkjet head 100 when a discharge operation of the inkjet head 100 ends or when the number of times of use of the discharge operation or the cumulative operation time exceeds a predetermined threshold value. When the cleaning process is performed, the controller controls the head conveyance robot 190 to move the position of the nozzle plate 101 of the inkjet head 100 to a predetermined position with respect to the cleaning station 200. Then, the cleaning process is executed in a state where the nozzle plate 101 of the inkjet head 100 is fixed at the position where the nozzle plate 101 has been moved.

### Outline of Embodiment of Liquid Discharge Apparatus

The liquid discharge apparatus according to an embodiment of the present disclosure is described below. The liquid discharge apparatus 10 according to the present embodiment includes at least the inkjet head 100 as a liquid discharge head according to an embodiment, and the head conveyance robot 190 that moves and fixes the inkjet head 100 to a predetermined position with respect to a cleaning station 200.

As described later, the liquid discharge apparatus 10 is characterized in that the nozzles 102 are arranged in a specific arrangement when the nozzles 102 and the nozzle plate 101 included in the inkjet head 100 are cleaned. In other words, the liquid discharge apparatus 10 includes the nozzle plate 101 formed such that the nozzles 102 are in a specific arrangement state when the inkjet head 100 is cleaned.

### Outline of Embodiment of Liquid Discharge Head

Next, a description is given of a configuration of the inkjet head 100 as a liquid discharge head according to an embodiment with reference to FIGS. 2A and 2B. FIGS. 2A and 2B are diagrams illustrating the inkjet head 100 in the state illustrated in FIG. 1. FIG. 2A is a perspective view schematically illustrating the inkjet head 100. FIG. 2B is a partial cross-sectional view of a housing 110 of the inkjet head 100. As illustrated in FIGS. 2A and 2B, the inkjet head 100 includes at least the nozzle plate 101 that is a part of the housing 110, a plurality of nozzles 102 formed in the nozzle plate 101, and a needle valve 131 that operates to discharge liquid ink from one nozzle 102. The needle valve 131 is held by the housing 110 serving as a nozzle holder. The housing 110 holds a liquid discharge mechanism including the needle valve 131 such that the discharge direction of the liquid ink discharged by the needle valve 131 is the direction indicated by a black arrow in FIG. 2B. In this case illustrated in FIG. 2B, the discharge direction corresponds to the Y-direction.

As illustrated in FIGS. 2A and 2B, the housing 110 as a nozzle holder has the plurality of nozzles 102, and a plurality of nozzle openings 103 as opening portions of the nozzles 102 are arranged on one face of the housing 110. The face on which the plurality of nozzle openings 103 are arranged corresponds to an opening array face. In other words, the face of the nozzle plate 101 corresponds to the opening array face.

In the housing 110, the plurality of nozzles 102 as liquid discharge ports for discharging liquid ink as droplets by the needle valve 131 are arranged. The plurality of nozzles 102 are formed in the nozzle plate 101 that is a nozzle opening face constituting a part of the housing 110 and constitutes the nozzle array face. The nozzle 102 and the needle valve 131 are in a one-to-one relation. Accordingly, when a particular needle valve 131 operates, a droplet is discharged from a nozzle 102 corresponding to the particular needle valve 131.

The nozzles 102 are relatively minute holes and are formed in a two-dimensional array state in the nozzle plate 101.

A description is given of a detailed structure of the inkjet head 100 with reference to FIGS. 3 and 4. FIG. 3 is an overall perspective view of the inkjet head 100 according to an embodiment of the present disclosure.

The inkjet head 100 mainly includes the housing 110, a connector 150, a supply port 111, and a collection port 113. The housing 110 is made of a metal material or a resin material. The connector 150 is a terminal for transmitting an electric signal, and in the present embodiment, the connector 150 is disposed on the upper portion of the housing 110.

The supply port 111 and the collection port 113 are disposed on the left and right sides, respectively, of the housing 110, and the supply port 111 supplies liquid ink into the inkjet head 100. The collection port 113 sends out liquid ink from the inkjet head 100.

FIG. 4 is a cross-sectional view of the inkjet head 100 cut along a line A-A in FIG. 3. The housing 110 includes the connector 150 for transmitting an electric signal in the upper portion of the housing 110 and includes the nozzle plate 101 as an opening array face in which nozzles 102 for discharging liquid are arranged and formed in a lower portion of the housing 110. The housing 110 further includes a flow path 112 to send liquid from the supply port 111 side to the collection port 113 side through the nozzle plate 101. The nozzle plate 101 is an example of a "nozzle member".

A plurality of liquid discharge modules 130 are disposed between the supply port 111 and the collection port 113 as liquid discharge nozzles to discharge liquid ink in the flow path 112 from the nozzle 102. The number of liquid discharge modules 130 corresponds to the number of nozzles 102. FIG. 4 illustrates a configuration including eight liquid discharge modules 130 corresponding to eight nozzles 102 arranged in a line.

Note that the number and arrangement of the nozzles 102 and the liquid discharge modules 130 are not limited to the configuration described above. For example, the number of nozzles 102 and the number of liquid discharge modules 130 may be nine or more or may be one instead of plural. The nozzles 102 and the liquid discharge modules 130 may be arranged in a plurality of rows instead of single row.

With the above-described configuration, the supply port 111 takes in pressurized liquid ink from the outside, sends the liquid ink in direction of an arrow a1, and supplies the liquid ink to the flow path 112. The flow path 112 sends liquid ink from the supply port 111 in the direction of an arrow a2. Then, the collection port 113 sends out liquid ink that is not discharged from the nozzles 102 arranged along the flow path 112 in the direction of the arrow a3.

The liquid discharge module 130 includes the needle valve 131 that opens and closes the nozzle 102 and a piezoelectric element 132 that drives the needle valve 131. The housing 110 includes a regulating member 134 at a position facing the upper end portion of the piezoelectric element 132. The regulating member 134 is in contact with the upper end portion of the piezoelectric element 132 and serves as a fixing point of the piezoelectric element 132. The needle valve 131 is an example of a discharger that discharges liquid ink, and the piezoelectric element 132 is an example of an actuator.

### Outline of Discharging Principle of Liquid Ink

A description is given of an outline of liquid ink discharge operation in the inkjet head 100 with reference to FIGS. 5 and 6. As illustrated in FIG. 5, when the leading edge of the needle valve 131 is in close contact with the nozzle 102, liquid ink is not discharged from the nozzle 102 as the pressurized liquid.

In the above-described configuration, when the piezoelectric element 132 is operated to displace the needle valve 131 in the right direction in FIG. 6, the nozzle 102 closed by the needle valve 131 is opened, and liquid ink is discharged from the nozzle 102 as discharge liquid droplets 3. When the piezoelectric element 132 is operated to displace the needle valve 131 in the left direction in FIG. 6, the needle valve 131 returns to the state illustrated in FIG. 5, so that the leading edge of the needle valve 131 is in contact with the nozzle 102 to close the nozzle 102. In other words, liquid is not discharged from the nozzle 102.

Since the operation cycle of the piezoelectric element 132 reaches several thousand times per minute, the needle valve 131 performs a piston operation between a close position at which the needle valve 131 closes the nozzle 102 and an open position at which the needle valve 131 opens the nozzle 102, according to the operation cycle. In response to the opening and closing operation of the nozzle 102, one droplet of liquid ink is discharged from the nozzle at a time.

### Stain of Nozzle 102

Next, a description is given of stain caused by the residual liquid ink (residual liquid) in the inkjet head 100 according to the present embodiment. FIGS. 7, 8, and 9 each illustrate a state of stain around the nozzle 102.

As illustrated in FIGS. 7 and 8, when the discharge operation ends, thickened residual liquid 31, which is thickened liquid, may remain on the nozzle 102 and the nozzle plate 101 as a nozzle opening face.

As illustrated in FIG. 9, residual liquid may be fixed around the nozzle 102 of the nozzle plate 101 by mist generated at the time of discharge and may be solidified residual liquid 32.

In a case where the thickened residual liquid 31 or the solidified residual liquid 32 is present around the nozzle 102 or on the nozzle plate 101, the thickened residual liquid 31 or the solidified residual liquid 32 may act as discharge resistance at the time of the subsequent discharge. Such discharge resistance may cause discharge bending or non-discharge in a case where the viscosity is high. In order to maintain the discharge quality, the thickened residual liquid 31 and the solidified residual liquid 32 are preferably removed.

### Outline of Cleaning Station 200

Next, the cleaning station 200 as an embodiment of a cleaning device included in the liquid discharge system 1 is illustrated in FIG. 10. As illustrated in FIG. 10, the cleaning station 200 includes a cleaning station housing 210, a base plate 220, and a sealing member 230 as a head holder.

Cleaning of nozzles 102 and nozzle plate 101 is performed at the cleaning station 200. When the inkjet head 100 is cleaned, the head conveyance robot 190 causes the inkjet head 100 to approach the cleaning station 200 and be fixed in contact with the cleaning station 200 in the state described later.

### Internal Structure of Cleaning Station 200

FIG. 11 illustrates an internal structure of the cleaning station 200 as a cleaner. FIG. 12 schematically illustrates a state in which the nozzle plate 101 is cleaned. FIG. 13 schematically illustrates a state in which the cleaning liquid 4 is removed after the cleaning operation for the nozzle plate 101.

As illustrated in FIG. 11, the cleaning station 200 includes at least a cleaning nozzle 240, an air nozzle 250, a cleaning liquid supply tube 241, and an air supply tube 251. The cleaning nozzle 240 serves as a cleaning liquid ejector. The air nozzle 250 is a gas ejector. The cleaning liquid supply tube 241 supplies the cleaning liquid 4 to the cleaning nozzle 240. The air supply tube 251 supplies gas to the air nozzle 250. The cleaning liquid supply tube 241 and the air supply tube 251 are supported at predetermined positions by the nozzle support rod 260.

FIG. 11 illustrates a state in which the inkjet head 100 is cleaned. When the inkjet head 100 is cleaned, the nozzle plate 101 of the inkjet head 100 is fixed in a state where the nozzle plate 101 is in close contact with the sealing member 230. Accordingly, such configuration described above prevents the cleaning liquid 4 from leaking out of the cleaning station 200.

The inkjet head 100 at the time of cleaning is fixed such that the face of the nozzle plate 101 as the opening array face is not oriented toward the horizontal plane (X-Y plane) but is oriented in a direction parallel to the horizontal plane. In other words, the opening array face is fixed such that the opening array face is an inclined face with respect to the horizontal plane. In the example of FIG. 11, the nozzle plate 101 having the opening array face is inclined at 90 degrees with respect to the horizontal plane. In other words, when the inkjet head 100 discharges liquid ink in the cleaning posture which is a posture at the time of cleaning, the discharge direction of the discharge liquid droplet 3 discharged from each nozzle 102 is not the gravity direction (-Z-direction) but the direction (X-direction) intersecting the gravity direction.

When the inkjet head 100 is cleaned, the cleaning liquid 4 is ejected to the nozzle plate 101 fixed in a state where the nozzle plate 101 is inclined with respect to the horizontal plane (for example, a vertical state). As a result, as described later, not only the cleaning liquid 4 but also the thickened residual liquid 31 and the solidified residual liquid 32 cleaned by the cleaning liquid 4 flow in the gravity direction along the surface of the nozzle plate 101.

FIG. 12 illustrates a state where the nozzle plate 101 and the nozzles 102 are cleaned. As illustrated in FIG. 12, when the nozzle plate 101 and the nozzles 102 are cleaned, the housing 110 is moved to a cleaning position, the nozzle plate 101 is brought into contact with and fixed to the sealing member 230, and then the cleaning liquid 4 is ejected from the cleaning nozzle 240. The cleaning nozzle 240 is configured to eject the cleaning liquid 4 after the inkjet head 100 is fixed in close contact with the sealing member 230 at a predetermined position. As a result, the controller included in the liquid discharge system 1 determines the fixed state of the inkjet head 100 based on a signal from a sensor that detects that the inkjet head 100 is fixed to the sealing member 230, and controls the start of ejection of the cleaning liquid 4 from the cleaning nozzle 240.

The ejection of the cleaning liquid 4 from the cleaning nozzle 240 is continued until a predetermined threshold time elapses or is controlled based on a detection signal from a sensor that detects a cleaning state of the inkjet head 100.

When the cleaning liquid 4 is ejected to the nozzle plate 101, a gap between the nozzle plate 101 and the base plate 220 is sealed by the sealing member 230 such that the cleaning liquid 4 does not scatter to the outside of the cleaning station 200.

Note that ejecting the cleaning liquid 4 to the nozzle plate 101 can remove residual liquid adhering to the surface of the nozzle plate 101 and the nozzles 102. However, the cleaning liquid 4 is attached to the nozzle plate 101. When the discharge of liquid ink onto the medium 2 is resumed while the cleaning liquid 4 remains attached to the nozzle plate 101, the cleaning liquid 4 may be attached to the medium 2, which affects the state in which the liquid ink is attached to the medium 2.

In order to prevent such an adverse effect described above, cleaning liquid removing air 5 is ejected from the air nozzle 250 after the cleaning liquid 4 is ejected to the nozzle plate 101 as illustrated in FIG. 12. The ejection of the cleaning liquid removing air 5 removes the cleaning liquid 4 adhering to the nozzle plate 101. The ejection of the cleaning liquid removing air 5 from the air nozzle 250 is continued until a predetermined threshold time elapses or is controlled based on a detection signal from a sensor that detects a remaining state of the cleaning liquid 4 in the inkjet head 100. When the cleaning liquid removing air 5 is ejected, the nozzle plate 101 is still fixed in a state where the nozzle plate 101 is along the gravity direction. Accordingly, the residual liquid moved on the nozzle plate 101 by the cleaning liquid removing air 5 flows in the gravity direction (-Z-direction) and is removed.

### Schematic Tube Arrangement Diagram of Cleaning Liquid and Air

Next, a description is given of a supply configuration of the cleaning liquid 4 and the cleaning liquid removing air 5, which enables the ejecting operation in the cleaning nozzle 240 and the ejecting operation in the air nozzle 250, respectively, provided in the cleaning station 200. FIG. 14 is a schematic diagram illustrating a supply configuration 270 of the cleaning liquid 4 and the cleaning liquid removing air 5.

In a place where the cleaning station 200 is installed, pressurized gas (air) is supplied from an air source 290 that is an air source of equipment that is available to use in advance. After the pressure of air is adjusted by a primary regulator 271, the air is branched into two lines by a primary joint 272 to be supplied.

The air in one line branched by the primary joint 272 is further branched by a secondary joint 273 and is divided into cleaning liquid ejecting air and the cleaning liquid removing air 5.

The air in the other line branched by the primary joint 272 is conveyed to a solenoid valve 279 and is used to control switching on and off of the cleaning liquid 4 and the cleaning liquid removing air 5.

Of the air branched by the secondary joint 273, the air for ejecting the cleaning liquid 4 is conveyed to a pressurizing tank 275 to eject the cleaning liquid 4 at a predetermined pressure. A liquid pressure regulator 274, which enables to regulate the pressure of the pressurizing tank 275, is disposed immediately before the pressurizing tank 275. The cleaning liquid 4 is injected into the pressurizing tank 275, and the cleaning liquid 4 pressurized to the predetermined pressure in the pressurizing tank 275 is conveyed to the cleaning nozzle 240.

A cleaning liquid switching valve 276 is disposed between the cleaning nozzle 240 and the pressurizing tank 275, and the air branched by the solenoid valve 279 is input to the cleaning liquid switching valve 276. A personal computer controller 280 controls the solenoid valve 279 to enable to control the input of air to the cleaning liquid switching valve 276.

When the housing 110 is moved to the cleaning station 200 and is determined to be fixed to the cleaning station 200, the supply of air from the solenoid valve 279 to the cleaning liquid switching valve 276 is switched on, and then the cleaning liquid 4 is ejected from the cleaning nozzle 240 toward the nozzle plate 101. When a predetermined time has elapsed, the supply of air from the solenoid valve 279 to the cleaning liquid switching valve 276 is switched off to terminate the ejecting of the cleaning liquid 4.

Of the air branched by the secondary joint 273, the air for ejecting the cleaning liquid removing air 5 is conveyed to the air nozzle 250 through an air pressure regulator 278 to adjust the air pressure to a desired air pressure and an air switching valve 277. The air branched by the solenoid valve 279 is input to the air switching valve 277, and the personal computer controller 280 controls the solenoid valve 279 to enable to control the input of the air to the air switching valve 277.

When the ejection of the cleaning liquid 4 to the nozzle plate 101 ends and the supply of air from the solenoid valve 279 to the cleaning liquid switching valve 276 is switched off, the supply of air to the air switching valve 277 is switched on to eject the cleaning liquid removing air 5 from the air nozzle 250. When a predetermined time has elapsed, the supply of air from the solenoid valve 279 to the air switching valve 277 is switched off to terminate the ejection of the cleaning liquid removing air 5.

### Problem to be solved in Cleaning of Inkjet Head

Here, a description is also given of a problem to be solved that may occur when the inkjet head 100 is cleaned using the cleaning station 200 with reference to the drawings.

FIG. 15 is a diagram illustrating a state in which the housing 110 of the inkjet head 100 is fixed to the sealing member 230 fixed to the cleaning station 200 as viewed from the opening side of the nozzles 102. In the example of FIG. 15, three arrays of the nozzles 102 arranged at predetermined intervals in the longitudinal direction are arranged side by side in the vertical direction. The housing 110 holds the arrays of the nozzles 102 in the state described above. Depending on the state in which the housing 110 is fixed to the cleaning station 200, the vertical direction and the horizontal direction in the drawing may be different from each other. For this reason, in the descriptions of the present specification, the vertical direction (Z-direction) is referred to as a vertical direction of the inkjet head 100, and the horizontal direction (X-direction) is referred to as a horizontal direction of the inkjet head 100. The vertical direction of the inkjet head 100 illustrated in FIG. 15 is defined as the direction of gravity.

As illustrated in FIG. 15, in the inkjet head 100. the plurality of nozzles 102 are formed in a planar shape on the nozzle plate 101 having a rectangular shape in a plan view. The contour of the surface (opening array face) of the nozzle plate 101 on which the nozzles 102 are formed is composed of four sides. The nozzles 102 are formed at predetermined intervals along two long sides (longitudinal direction) facing each other out of the four sides. The plurality of nozzles 102 formed along the longitudinal direction is referred to as a nozzle row, and a plurality of nozzle rows are disposed in the short direction of the nozzle plate 101. In other words, the plurality of nozzle rows, in which the plurality of nozzles 102 are arranged, are arranged on the opening array face as the face of the nozzle plate 101. Note that the nozzle rows are formed at predetermined intervals in the short direction of the nozzle plate 101. As described above, when the inkjet head 100 is fixed to the cleaning station 200, the inkjet head 100 includes the plurality of nozzles 102 along the gravity direction on the opening array face.

For example, assume that the cleaning of the nozzles 102 is performed in a case where the nozzles 102 are arranged as illustrated in FIG. 15, in other words, a case where, when the housing 110 is fixed to the sealing member 230, the nozzles 102 are arranged as illustrated in FIG. 15. In this case, the cleaning liquid 4 ejected to the inkjet head 100 flows in the gravity direction (-Z direction) like a post-cleaning residual liquid 30 illustrated in FIG. 16. In this case, the thickened residual liquid 31 and the solidified residual liquid 32 washed off by the cleaning liquid 4 also flow in the gravity direction along the surface of the nozzle plate 101 together with the post-cleaning residual liquid 30.

When the post-cleaning residual liquid 30 flows in the state illustrated in FIG. 16, the post-cleaning residual liquid 30 washed away from the nozzle 102 at the uppermost position in the gravity direction flows toward the nozzle 102 at a middle position. Further, the post-cleaning residual liquid 30 washed away from the middle position in the gravity direction flows to the nozzle 102 at the lowermost position together with the post-cleaning residual liquid 30 flowing from the uppermost position. In this way, the post-cleaning residual liquid 30 flows from top to bottom in the gravity direction. As a result, secondary stain due to the post-cleaning residual liquid 30 flowing out from the upper position is more likely to occur as the position of the nozzle 102 is lower. The nozzle 102 at the lowermost position and the surface of the nozzle plate 101 in the vicinity of the nozzle 102 at the lowermost position are less effectively cleaned by the cleaning liquid 4. As a result, the thickened residual liquid 31 or the solidified residual liquid 32 is more likely to remain uncleaned.

The post-cleaning residual liquid 30 remaining on the surface of the nozzle plate 101 without being blown off by the ejection of the cleaning liquid removing air 5 also moves in the gravity direction in the same manner as described above. As a result, the post-cleaning residual liquid 30 may adhere again to the nozzle 102 at the lowermost position. When the inkjet head 100 dries in such state described above, the thickened residual liquid 31 or the solidified residual liquid 32 remains on the surface of the nozzle plate 101 or the nozzle opening 103 again. As a result, a problem such as discharge bending or non-discharge may occur.

### First Embodiment

Next, a description is given of a liquid discharge head included in the liquid discharge apparatus, according to a first embodiment of the present disclosure. The inkjet head 100 according to the present embodiment can solve the problems described above, maintain the discharge performance of the inkjet head 100, and prevent the occurrence of problems such as discharge bending and non-discharge.

In the inkjet head 100 according to the present embodiment, the plurality of nozzles 102 included by the housing 110 are formed such that at least the positions of the nozzles 102 corresponding to positions adjacent to each other in the gravity direction do not overlap each other in the gravity direction when the inkjet head 100 is fixed during cleaning. For example, as illustrated in FIG. 17, among the nozzles 102 on the surface (opening array face) of the nozzle plate 101, the nozzle 102 formed at the uppermost position in the gravity direction and the nozzle 102 formed at the lowermost position in the gravity direction are formed at positions that do not overlap each other in the gravity direction. In addition, the nozzle 102 formed at the middle position is formed at a position not overlapping with the nozzle 102 formed at the uppermost position in the gravity direction. The nozzle 102 formed at the middle position is also formed at a position not overlapping with the nozzle 102 formed at the lowermost position in the gravity direction.

When the inkjet head 100 is fixed to the cleaning station 200 at the time of cleaning, the nozzle plate 101 is fixed in a state where the nozzle plate 101 is oriented in the horizontal direction. In other words, when the nozzle plate 101 is fixed in a posture perpendicular (an example of inclination) to the horizontal plane, the nozzles 102 (nozzle openings 103) are formed in the nozzle plate 101 such that the positional relation between the nozzles 102 (nozzle openings 103) adjacent to each other in the gravity direction is a positional relation in which the nozzles 102 do not overlap with each other in the gravity direction.

In other words, the nozzles 102 are formed in the nozzle plate 101 such that the mutual positional relation in the arrangement state of the plurality of nozzles 102 is established when the nozzle plate 101 is fixed in a state where the nozzle plate 101 is in close contact with the sealing member 230 by the head conveyance robot 190.

FIG. 18 illustrates a state in which the cleaning process is performed on the inkjet head 100 according to the present embodiment illustrated in FIG. 17. As illustrated in FIG. 18, in the mutual positional relation of the nozzles 102, the nozzles 102 are formed at positions not overlapping each other in the gravity direction. As a result, since the post-cleaning residual liquid 30 flows from the upper position to the lower position, the post-cleaning residual liquid 30 flowing from the upper position is less likely to flow to the nozzles 102 at the middle position. In addition, the post-cleaning residual liquid 30 flowing from the upper position and the middle position is less likely to flow to the nozzles 102 at the lower position.

Even when the post-cleaning residual liquid 30 slightly remaining after the cleaning liquid removing air 5 is blown flows to the lower position in the gravity direction, the post-cleaning residual liquid 30 is less likely to re-adhere to the nozzle 102 formed at the lower position. As a result, even when the post-cleaning residual liquid 30 dries in a state where the post-cleaning residual liquid 30 remains on the nozzle plate 101, the present embodiment can prevent the thickened residual liquid 31 or the solidified residual liquid 32 from remaining on the nozzle 102 and in the vicinity of the nozzle 102. In other words, the occurrence of problems such as the discharge bending and the non-discharge due to secondary stain can be reduced.

The inkjet head 100 is an embodiment of a liquid discharge head that can discharge liquid in multiple directions including the gravity direction, and the discharge direction of the discharge liquid droplet 3 in the inkjet head 100 is controlled by the head conveyance robot 190. In other words, the cleaning process is also executed in a state where the inkjet head 100 is supported and fixed in a predetermined posture by the head conveyance robot 190. When the cleaning process is performed, the nozzles 102 are formed and used such that the positional relation of the arrangement of the nozzles 102 is in a state in which the nozzles 102 do not overlap in the gravity direction.

In other words, the inkjet head 100 according to the present embodiment can produce an effect of preventing a problem (discharge bending or the non-discharge) which may occur when the discharge direction of the discharge liquid droplet 3 is not the gravity direction. In other words, the present embodiment can solve the problem that occurs when the posture of the inkjet head 100 at the time of cleaning is not a posture in which the discharge direction of the discharge liquid droplet 3 is the gravity direction. The posture of the inkjet head 100 is, for example, a posture in which the discharge direction of the discharge liquid droplets 3 is a direction orthogonal to the gravity direction.

### Modification of First Embodiment

As illustrated in FIG. 19, the number of nozzles 102 arranged in the gravity direction (the number of nozzle rows) may be larger than the number of nozzles 102 in the gravity direction illustrated in FIG. 17. FIG. 17 illustrates a configuration in which the needle valves 131 included by the housing 110 of the inkjet head 100 are arranged in three rows in the gravity direction, and thus three rows of the nozzles 102 are formed in the gravity direction. In order to improve a series of productivity of forming an image by discharge of liquid and in order to improve coating quality, the number of nozzles 102 (the number of nozzle rows) included by the inkjet head 100 may be increased compared to the example of FIG. 17. In this case, three or more nozzle rows are arranged in the gravity direction on the surface (opening array face) of the nozzle plate 101 forming the housing 110. In other words, the number of the needle valves 131 arranged along the gravity direction is increased.

As illustrated in FIG. 17, the nozzles 102 are formed at positions where the nozzles 102 do not overlap each other in the gravity direction in a state where the housing 110 is fixed to the cleaning station 200. Even in such a case, the positional relation of the nozzles 102 in the gravity direction may be in a state of partially overlapping each other as the number of the nozzles 102 formed on the nozzle plate 101 increases. FIG. 19 illustrates an example of such overlapping described above. When the number of nozzles 102 arranged in the gravity direction is two dimensionally increased, the positional relation of the nozzles 102 in the gravity direction in the fixed state at the time of cleaning can be a positional relation in which nozzles 102 at the uppermost position and nozzles 102 at the lowermost position overlap each other. In a case where the nozzles 102 are formed more than in the example of FIG. 19, the number of nozzles 102 overlapping each other in the gravity direction might increase in the positional relation of the nozzles 102 in the fixed state at the time of cleaning.

For this reason, at least the positions of nozzles 102 formed at the uppermost position and nozzles 102 formed at the lowermost position among the mutual positional relations of the nozzles 102 in the gravity direction are allowed to overlap with each other. The mutual positional relations of the other nozzles 102 in the gravity direction are formed so that the other nozzles 102 do not overlap with each other in the gravity direction. In other words, as illustrated in FIG. 19, the distance between the nozzle 102 formed at the uppermost position and the nozzle 102 formed at the lowermost position in a case where the nozzles 102 overlap in the gravity direction is set as large as possible. As a result, the occurrence of secondary stain can be reduced.

The inkjet head 100 illustrated in FIG. 19 includes positional relations in which the nozzles 102 corresponding to the uppermost position and the nozzles 102 corresponding to the lowermost position, among the positions of the nozzles 102 formed on the nozzle plate 101, overlap each other in the gravity direction. On the other hand, the other nozzles 102 have positional relations in which the other nozzles 102 do not overlap in the gravity direction.

### Second Embodiment

Next, a description is given of a liquid discharge apparatus according to a second embodiment of the present disclosure. In the first embodiment, in a state where the housing 110 is fixed to the cleaning station 200, the nozzles 102 are arranged so as not to overlap each other in the relative positional relation in the gravity direction.

In the second embodiment, as illustrated in FIG. 20, a base plate 220a and a sealing member 230a included in a cleaning station 200a are inclined with respect to the horizontal plane such that the posture of the housing 110 of the inkjet head 100 during cleaning is fixed in an inclined posture.

During cleaning, the nozzle plate 101 of the inkjet head 100 is fixed in close contact with the sealing member 230a such that the cleaning liquid 4 does not leak out of the cleaning station 200a. In this fixed state, the nozzle plate 101 is fixed such that the longitudinal direction of the nozzle plate 101 is inclined with respect to the horizontal plane. The inclination with respect to the horizontal direction is a predetermined inclination angle θ. The inclination angle θ is determined by the base plate 220a and the sealing member 230a provided on the cleaning station housing 210a. Due to such configuration described above, a state in which none of the nozzles 102 overlap each other in the gravity direction during cleaning can be created.

FIG. 21 is a diagram illustrating an example of a fixed posture of the inkjet head 100 fixed to the cleaning station 200a at the time of cleaning according to the present embodiment. When the inkjet head 100 is cleaned with the cleaning station 200a, a portion to which the inkjet head 100 is fixed is inclined at the inclination angle θ with respect to a horizontal plane. Accordingly, as illustrated in FIG. 21, among the sides constituting the contour of the nozzle plate 101 of the housing 110, the side in the longitudinal direction is inclined at the inclination angle θ with respect to the horizontal plane, and the inkjet head 100 is fixed to the cleaning station 200a in this state.

As illustrated in FIG. 1, the inkjet head 100 including the housing 110 is supported by the support member which is rotatable in the axial direction of a large number of axes provided in the head conveyance robot 190. Accordingly, the direction of the inkjet head 100 can be freely changed according to the rotation of the movable axes. As a result, in the fixed posture with respect to the cleaning station 200a, the inkjet head 100 can maintain the posture in which a longitudinal direction of the housing 110 is inclined at the inclination angle θ with respect to the horizontal plane.

In other words, in the inkjet head 100 according to the second embodiment, the housing 110 as the nozzle holder is maintained in a state of being inclined at the inclination angle θ when the housing 110 is fixed to the cleaning station 200a. Due to such inclined state description above, even in a case where the mutual positions of the nozzles 102 in the gravity direction overlap when the longitudinal direction of the housing 110 is parallel to the horizontal plane as illustrated in FIG. 15, the nozzles 102 can be brought into a state in which the nozzles 102 do not overlap in the gravity direction during cleaning.

In other words, as illustrated in FIG. 21, since the nozzle plate 101 is fixed and cleaned in a state where the side in the longitudinal direction of the nozzle plate 101 forms the inclination angle θ with respect to the horizontal plane, the post-cleaning residual liquid 30 generated when the upper nozzles 102 are cleaned is less likely to flow to the lower nozzles 102. As a result, unwashed portions can be reduced.

In addition, in a case where a small amount of cleaning liquid droplets remains after the cleaning liquid removing air 5 is blown, the cleaning liquid droplets move to the lower side in the gravity direction. However, since the nozzle 102 does not present in the gravity direction, secondary stain can be prevented, and the cleanability is improved.

As described in the first embodiment, also in the second embodiment, in a case where the number of nozzles 102 is increased, it is difficult to create a state in which the nozzles 102 do not overlap each other in the gravity direction. In this case, the head conveyance robot 190 adjusts the inclination angle θ at which the inkjet head 100 is fixed to the cleaning station 200. The head conveyance robot 190 adjusts the inclination angle θ so that the distance between the nozzles 102 is set as large as possible when the nozzles 102 overlap each other in the gravity direction. As a result, secondary stain is less likely to occur.

FIGS. 22 is a diagram illustrating a posture of the inkjet head 100 in which a side of the nozzle plate 101 is in parallel to the horizontal plane when the inkjet head 100 is fixed to the cleaning station 200. FIGS. 23 is a diagram illustrating a posture of the inkjet head 100 in which the side of the nozzle plate 101 forms the inclination angle θ to the horizontal plane when the inkjet head 100 is fixed to the cleaning station 200. A description is given of the difference in the location where the post-cleaning residual liquid 30 is more likely to accumulate after cleaning with reference to FIGS. 22 and 23.

As illustrated in FIG. 22, in a case where the housing 110 of the inkjet head 100 is fixed to the cleaning station 200 (at the time of cleaning) and the longitudinal direction of the nozzle plate 101 is fixed to be parallel to the horizontal plane, the post-cleaning residual liquid 30 remains at the lower end of the sealing member 230 after cleaning. In FIGS. 22 and 23, a dashed circle indicates a remaining position 35 of the post-cleaning residual liquid 30.

On the other hand, as illustrated in FIG. 23, in a case where the nozzle plate 101 is fixed in a state where the longitudinal direction of the nozzle plate 101 forms an inclination angle θ with respect to the horizontal plane, the post-cleaning residual liquid 30 remains at a corner portion of the sealing member 230.

In a case where the cleaning liquid 4 or the post-cleaning residual liquid 30 remains on the nozzle plate 101, a discharge failure may occur. Thus, the post-cleaning residual liquid 30 remaining on the nozzle plate 101 is preferably removed as much as possible. In this case, in a case where the longitudinal direction of the nozzle plate 101 is fixed in parallel with the horizontal plane as in the example of FIG. 22, the post-cleaning residual liquid 30 may remain in a wide range of the overall lower end of the sealing member 230. However, as illustrated in FIG. 23, in a case where the sealing member 230 is fixed in a posture forming the inclination angle θ, the post-cleaning residual liquid 30 remaining in the corner portion of the sealing member 230 alone is desired to be removed. As a result, the post-cleaning residual liquid 30 is easily removed.

### Others

In the method of cleaning the inkjet head 100 according to the first embodiment and the second embodiment described above, the cleaning liquid 4 is ejected to the nozzle 102 and the nozzle plate 101. However, the cleaning method applicable to the liquid discharge apparatus according to the present disclosure is not limited to the above-described methods.

For example, the same effect can be obtained in a wiping method using a wiper. Even when the wiping method is applied, as described above, the cleaning liquid is desired to be applied in order to efficiently clean the nozzle 102 and the nozzle plate 101. Accordingly, the post-cleaning residual liquid 30 may flow in the gravity direction after the nozzle plate 101 is wiped.

As described in the first embodiment and the second embodiment, when the nozzle holder is fixed to the cleaning station 200, the nozzles 102 are controlled so as not to overlap with each other in the gravity direction. As a result, secondary stain can be reduced even in the wiping method and the cleanability can be improved.

The invention is defined in the appended claims.

### [Reference Signs List]

1: liquid discharge system
10: liquid discharge apparatus
100: inkjet head
101: nozzle plate
102: nozzle
110: housing
131: needle valve
190: head conveyance robot
200: cleaning station
210: cleaning station housing
220: base plate
230: sealing member
280: personal computer controller

## Claims

1. A liquid discharge apparatus (10) comprising:
a plurality of liquid discharge nozzles (102) configured to discharge liquid;
a housing (110) including the plurality of liquid discharge nozzles (102) and an opening array face in which a plurality of nozzle rows are arranged, the plurality of nozzle rows in which a plurality of nozzle openings of the plurality of liquid discharge nozzles (100) are arranged; and
a support (190) supporting the housing (110), the support (190) configured to fix the housing (110) in a cleaning posture that is a fixed posture of the housing (110) when the opening array face is cleaned,
the opening array face having the plurality of nozzle openings at positions where the plurality of nozzle openings do not overlap each other in a gravity direction of the housing when the housing is fixed in the cleaning posture,
**characterized in that**
the support (190) is a multi-axis movable support having a plurality of axes to rotate in different directions about the plurality of axes to multi-axis support the housing, and **in that** the support (190) holds the opening array face in the cleaning posture when the opening array face is cleaned.

2. The liquid discharge apparatus (10) according to claim 1,
wherein the cleaning posture is a posture of the housing (110) in a state where the opening array face is inclined with respect to a horizontal plane, and
wherein the opening array face in the cleaning posture has the plurality of nozzle openings at positions at which nozzle openings adjacent to each other in the gravity direction do not overlap each other in the gravity direction.

3. The liquid discharge apparatus (10) according to claim 1,
wherein the cleaning posture is a posture of the housing (110) in a state where the opening array face is inclined with respect to a horizontal plane,
wherein the opening array face in the cleaning posture has the plurality of nozzle openings at positions at which uppermost nozzle openings and lowermost nozzle openings in the gravity direction do not overlap each other in the gravity direction, and nozzle openings adjacent to each other in the gravity direction do not overlap each other in the gravity direction.

4. The liquid discharge apparatus (10) according to any one of claims 1 to 3, wherein when the housing (110) is fixed in the cleaning posture, nozzle openings of an uppermost nozzle row and nozzle openings of a lowermost nozzle row in the gravity direction, among the plurality of nozzle rows arranged in the opening array face, overlap in the gravity direction, and nozzle openings of other nozzle rows than the uppermost nozzle row and the lowermost nozzle row in the gravity direction do not overlap each other in the gravity direction.

5. The liquid discharge apparatus (10) according to claim 1,
wherein the cleaning posture is a posture of the housing in a state where the opening array face is inclined with respect to a horizontal plane, and a side of a contour of the opening array face is inclined with respect to the horizontal plane, and
wherein the opening array face has the plurality of nozzle openings at positions where the plurality of nozzle openings do not overlap each other in the gravity direction of the housing when the housing is fixed in the cleaning posture.

6. The liquid discharge apparatus (10) according to any one of claims 1 to 5,
wherein the multi-axis movable support rotates the housing (110) in an axial direction perpendicular to the opening array face to fix the housing (110) when the opening array face is cleaned.

7. A liquid discharge system (1) comprising:
the liquid discharge apparatus (10) according to any one of claims 1 to 6, and
a cleaning device (200) configured to clean the liquid discharge nozzles (102), the cleaning device (200) including:
a cleaner configured to clean the plurality of nozzle openings and the opening array face; and
a head holder (230) configured to hold the housing (110) in the cleaning posture that is the fixed posture of the housing (110) when the housing (110) is cleaned by the cleaner.

8. The liquid discharge system (1) according to claim 7,
wherein the cleaner includes a cleaning liquid ejector (240) configured to eject cleaning liquid to clean the plurality of nozzle openings and the opening array face, and a gas ejector (250) configured to eject gas to the plurality of nozzle openings and the opening array face.

9. A cleaning method to be executed by a liquid discharge apparatus according to any one of claims 1 to 6, the method comprising:
moving an opening array face to a cleaning position, the opening array face in which a plurality of nozzle rows are arranged, the plurality of nozzle rows in which a plurality of nozzle openings of the plurality of liquid discharge nozzles are arranged;
fixing the opening array face in a posture inclined with respect to a horizontal plane such that the plurality of nozzle openings do not overlap each other in a gravity direction in the opening array face; and
ejecting cleaning liquid to the opening array face fixed in the posture to clean the opening array face.

## Patentansprüche

1. Flüssigkeitsausstoßvorrichtung (10), umfassend:
eine Vielzahl von Flüssigkeitsausstoßdüsen (102), die zum Ausstoßen von Flüssigkeit konfiguriert sind;
ein Gehäuse (110) mit der Vielzahl von Flüssigkeitsausstoßdüsen (102) und einer Öffnungsanordnungsfläche, in der eine Vielzahl von Düsenreihen angeordnet ist, wobei in der Vielzahl von Düsenreihen eine Vielzahl von Düsenöffnungen der Vielzahl von Flüssigkeitsausstoßdüsen (100) angeordnet ist; und
eine Halterung (190), die das Gehäuse (110) hält, wobei die Halterung (190) so konfiguriert ist, dass sie das Gehäuse (110) in einer Reinigungsposition fixiert, die eine feste Position des Gehäuses (110) ist, wenn die Öffnungsanordnungsfläche gereinigt wird, wobei die Öffnungsanordnungsfläche die mehreren Düsenöffnungen an Positionen aufweist, an denen sich die mehreren Düsenöffnungen in einer Schwerkraftrichtung des Gehäuses nicht überlappen, wenn das Gehäuse in der Reinigungsposition fixiert ist,
**dadurch gekennzeichnet, dass**
die Halterung (190) eine mehrachsig bewegliche Halterung mit mehreren Achsen ist, um sich in verschiedenen Richtungen um die mehreren Achsen zu drehen, um das Gehäuse mehrachsig zu halten, und
dass die Halterung (190) die Öffnungsanordnungsfläche in der Reinigungsposition hält, wenn die Öffnungsanordnungsfläche gereinigt wird.

2. Flüssigkeitsausstoßvorrichtung (10) nach Anspruch 1,
wobei die Reinigungsposition eine Position des Gehäuses (110) in einem Zustand ist, in dem die Öffnungsanordnungsfläche in Bezug auf eine horizontale Ebene geneigt ist, und wobei die Öffnungsanordnungsfläche in der Reinigungsposition mehrere Düsenöffnungen an Positionen aufweist, an denen benachbarte Düsenöffnungen in Schwerkraftrichtung sich in Schwerkraftrichtung nicht überlappen.

3. Flüssigkeitsausstoßvorrichtung (10) nach Anspruch 1,
wobei die Reinigungsposition eine Position des Gehäuses (110) in einem Zustand ist, in dem die Öffnungsanordnungsfläche in Bezug auf eine horizontale Ebene geneigt ist,
wobei die Öffnungsanordnungsfläche in der Reinigungsposition die mehreren Düsenöffnungen an Positionen aufweist, an denen sich die obersten Düsenöffnungen und die untersten Düsenöffnungen in Schwerkraftrichtung in Schwerkraftrichtung nicht überlappen und benachbarte Düsenöffnungen in Schwerkraftrichtung sich in Schwerkraftrichtung nicht überlappen.

4. Flüssigkeitsausstoßvorrichtung (10) nach einem der Ansprüche 1 bis 3, wobei,
wenn das Gehäuse (110) in der Reinigungsstellung fixiert ist, sich Düsenöffnungen einer obersten Düsenreihe und Düsenöffnungen einer untersten Düsenreihe in Schwerkraftrichtung unter den mehreren Düsenreihen, die in der Öffnungsanordnungsfläche angeordnet sind, in Schwerkraftrichtung überlappen und sich Düsenöffnungen anderer Düsenreihen als der obersten Düsenreihe und der untersten Düsenreihe in Schwerkraftrichtung in Schwerkraftrichtung nicht überlappen.

5. Flüssigkeitsausstoßvorrichtung (10) nach Anspruch 1,
wobei die Reinigungsposition eine Position des Gehäuses in einem Zustand ist, in dem die Öffnungsanordnungsfläche in Bezug auf eine horizontale Ebene geneigt ist und eine Seite einer Kontur der Öffnungsanordnungsfläche in Bezug auf die horizontale Ebene geneigt ist, und
wobei die Öffnungsanordnungsfläche die mehreren Düsenöffnungen an Positionen aufweist, an denen sich die mehreren Düsenöffnungen in der Schwerkraftrichtung des Gehäuses nicht überlappen, wenn das Gehäuse in der Reinigungsposition fixiert ist.

6. Flüssigkeitsausstoßvorrichtung (10) nach einem der Ansprüche 1 bis 5,
wobei die mehrachsig bewegliche Halterung das Gehäuse (110) in einer axialen Richtung senkrecht zur Öffnungsanordnungsfläche dreht, um das Gehäuse (110) zu fixieren, wenn die Öffnungsanordnungsfläche gereinigt wird.

7. Flüssigkeitsausgabesystem (1), umfassend:
die Flüssigkeitsausstoßvorrichtung (10) nach einem der Ansprüche 1 bis 6 und eine Reinigungsvorrichtung (200), die zum Reinigen der Flüssigkeitsauslassdüsen (102) konfiguriert ist,
wobei die Reinigungsvorrichtung (200) umfasst:
einen Reiniger, der zum Reinigen der mehreren Düsenöffnungen und der Öffnungsanordnungsfläche konfiguriert ist; und
einen Kopfhalter (230), der so konfiguriert ist, dass er das Gehäuse (110) in der Reinigungsposition hält, die die feste Position des Gehäuses (110) ist, wenn das Gehäuse (110) durch den Reiniger gereinigt wird.

8. Flüssigkeitsausstoßsystem (1) nach Anspruch 7,
wobei der Reiniger einen Reinigungsflüssigkeitsauswerfer (240), der so konfiguriert ist, dass er Reinigungsflüssigkeit ausstößt, um die Vielzahl von Düsenöffnungen und die Öffnungsanordnungsfläche zu reinigen, und einen Gasauswerfer (250) umfasst, der so konfiguriert ist, dass er Gas zu der Vielzahl von Düsenöffnungen und der Öffnungsanordnungsfläche ausstößt.

9. Reinigungsverfahren, das von einer Flüssigkeitsausstoßvorrichtung gemäß einem der Ansprüche 1 bis 6 auszuführen ist, wobei das Verfahren umfasst:
Bewegen einer Öffnungsanordnungsfläche in eine Reinigungsposition, wobei die Öffnungsanordnungsfläche eine Vielzahl von Düsenreihen aufweist, wobei die Vielzahl von Düsenreihen eine Vielzahl von Düsenöffnungen der Vielzahl von Flüssigkeitsausstoßdüsen aufweist;
Fixieren der Öffnungsanordnungsfläche in einer gegenüber einer horizontalen Ebene geneigten Position, so dass sich die mehreren Düsenöffnungen in einer Schwerkraftrichtung in der Öffnungsanordnungsfläche nicht überlappen; und
Ausstoßen von Reinigungsflüssigkeit auf die in dieser Position fixierte Öffnungsanordnungsfläche, um die Öffnungsanordnungsfläche zu reinigen.

## Revendications

1. Appareil de projection de liquide (10), comprenant :
une pluralité de buses de projection de liquide (102) configurées pour projeter un liquide ;
un boîtier (110) incluant la pluralité de buses de projection de liquide (102) et une face de réseau d'ouverture, dans laquelle une pluralité de rangées de buses sont agencées, dans laquelle pluralité de rangées de buses une pluralité d'ouvertures de buses de la pluralité de buses de projection de liquide (100) sont agencées ; et
un support (190) supportant le boîtier (110), le support (190) étant configuré pour fixer le boîtier (110) dans une disposition de nettoyage qui est une disposition fixée du boîtier (110) lorsque la face de réseau d'ouverture est nettoyée,
la face de réseau d'ouverture ayant la pluralité d'ouvertures de buses à des positions où la pluralité d'ouvertures de buses ne se chevauchent pas dans une direction de gravité du boîtier lorsque le boîtier est fixé dans la disposition de nettoyage,
**caractérisé en ce que**
le support (190) est une support mobile multiaxial ayant une pluralité d'axes pour tourner dans différentes directions autour de la pluralité d'axes pour supporter le boîtier multiaxialement, et
**en ce que** le support (190) maintient la face de réseau d'ouverture dans la disposition de nettoyage lorsque la face de réseau d'ouverture est nettoyée.

2. Appareil de projection de liquide (10) selon la revendication 1,
dans lequel la disposition de nettoyage est une disposition du boîtier (110) dans un état où la face de réseau d'ouverture est inclinée par rapport à un plan horizontal, et
dans lequel la face de réseau d'ouverture dans la disposition de nettoyage a la pluralité d'ouvertures de buses à des positions auxquelles des ouvertures de buses adjacentes les unes aux autres dans la direction de gravité ne se chevauchent pas dans la direction de gravité.

3. Appareil de projection de liquide (10) selon la revendication 1,
dans lequel la disposition de nettoyage est une disposition du boîtier (110) dans un état où la face de réseau d'ouverture est inclinée par rapport à un plan horizontal,
dans lequel la face de réseau d'ouverture dans la disposition de nettoyage a la pluralité d'ouvertures de buses à des positions auxquelles des ouvertures de buses les plus hautes et des ouvertures de buses les plus basses dans la direction de gravité ne se chevauchent pas dans la direction de gravité, et des ouvertures de buses adjacentes les unes aux autres dans la direction de gravité ne se chevauchent pas dans la direction de gravité.

4. Appareil de projection de liquide (10) selon l'une quelconque des revendications 1 à 3, dans lequel
lorsque le boîtier (110) est fixé dans la disposition de nettoyage, des ouvertures de buses d'une rangée de buses les plus hautes et des ouvertures de buses d'une rangée de buses les plus basses dans la direction de gravité, parmi la pluralité de rangées de buses agencées dans la face de réseau d'ouverture, se chevauchent dans la direction de gravité, et des ouvertures de buses de rangées de buses autres que la rangée de buses les plus hautes et la rangée de buses les plus basses dans la direction de gravité ne se chevauchent pas dans la direction de gravité.

5. Appareil de projection de liquide (10) selon la revendication 1,
dans lequel la disposition de nettoyage est une disposition du boîtier dans un état où la face de réseau d'ouverture est inclinée par rapport à un plan horizontal, et un côté d'un contour de la face de réseau d'ouverture est incliné par rapport à the plan horizontal, et
dans lequel la face de réseau d'ouverture a la pluralité d'ouvertures de buses à des positions où la pluralité d'ouvertures de buses ne se chevauchent pas dans la direction de gravité du boîtier lorsque le boîtier est fixé dans la disposition de nettoyage.

6. Appareil de projection de liquide (10) selon l'une quelconque des revendications 1 à 5,
dans lequel le support mobile multiaxial fait tourner le boîtier (110) dans une direction axiale perpendiculaire à la face de réseau d'ouverture pour fixer le boîtier (110) lorsque la face de réseau d'ouverture est nettoyée.

7. Système de projection de liquide (1), comprenant :
l'appareil de projection de liquide (10) selon l'une quelconque des revendications 1 à 6, et
un dispositif de nettoyage (200) configuré pour nettoyer les buses de projection de liquide (102),
le dispositif de nettoyage (200) incluant :
un organe nettoyeur configuré pour nettoyer la pluralité d'ouvertures de buses et la face de réseau d'ouverture ; et
un organe mainteneur de tête (230) configuré pour maintenir le boîtier (110) dans la disposition de nettoyage qui est la disposition fixée du boîtier (110) lorsque le boîtier (110) est nettoyé par l'organe nettoyeur.

8. Système de projection de liquide (1) selon la revendication 7,
dans lequel l'organe nettoyeur inclut un organe éjecteur de liquide de nettoyage (240) configuré pour éjecter un liquide de nettoyage pour nettoyer la pluralité d'ouvertures de buses et la face de réseau d'ouverture, et un organe éjecteur de gaz (250) configuré pour éjecter un gaz vers la pluralité d'ouvertures de buses et la face de réseau d'ouverture.

9. Procédé de nettoyage destiné à être exécuté par un appareil de projection de liquide selon l'une quelconque des revendications 1 à 6, le procédé comprenant :
le déplacement d'une face de réseau d'ouverture jusqu'à une position de nettoyage, dans laquelle face de réseau d'ouverture une pluralité de rangées de buses sont agencées, dans laquelle pluralité de rangées de buses une pluralité d'ouvertures de buses de la pluralité de buses de projection de liquide sont agencées ;
la fixation de la face de réseau d'ouverture dans une disposition inclinée par rapport à un plan horizontal de manière telle que la pluralité d'ouvertures de buses ne se chevauchent pas dans une direction de gravité dans la face de réseau d'ouverture ; et
l'éjection de liquide de nettoyage vers la face de réseau d'ouverture fixée dans la disposition pour nettoyer la face de réseau d'ouverture.
